Europäisches Patentamt

European Patent Office

Office européen des brevets

(19)

(11)  EP 0 773 394 B1

(12)     EUROPEAN PATENT SPECIFICATION

(45) Date of publication and mention
      of the grant of the patent:
      **15.09.1999  Bulletin 1999/37**

(51) Int Cl.⁶: **F16K 31/06**, H01F 7/18

(21) Application number: **95117831.8**

(22) Date of filing: **13.11.1995**

(54) **Method and circuit for increasing the life of solenoid valves**

Verfahren und Schaltung zum Verlängern des Lebens eines Magnetventils

Procédé et circuit pour augmenter la durée de vie d'une électrovanne

(84) Designated Contracting States:
     **AT DE ES FR GB IT**

(43) Date of publication of application:
     **14.05.1997  Bulletin 1997/20**

(73) Proprietor: **WHIRLPOOL EUROPE B.V.**
     **5507 SK Veldhoven (NL)**

(72) Inventors:
     • **Elliot, Robert S., c/o Whirlpool Europe s.r.l.**
       **I-21024 Biandronno (VA) (IT)**
     • **Frasnetti, Luca, c/o Whirlpool Europe s.r.l.**
       **I-21024 Biandronno (VA) (IT)**

(74) Representative: **Guerci, Alessandro**
     **Whirlpool Europe S.r.l.**
     **Patent Department**
     **Viale G. Borghi 27**
     **21025 Comerio (VA) (IT)**

(56) References cited:
     US-A- 3 476 128          US-A- 3 523 676
     US-A- 3 949 964          US-A- 4 531 708

     • PATENT ABSTRACTS OF JAPAN vol. 7 no. 5
       (M-184) [1150] ,11 January 1983 & JP-A-57
       163781 (KOMATSU) 8 October 1982,

## Description

This invention relates to a method (according to the preamble of claim 1) for prolonging the useful life of solenoid valves used for fluid flow shutoff and comprising a coil, and a mobile core loaded by a return spring and presenting a valving member formed from an elastomer.

The invention also relates to a circuit for implementing the method.

Document US-A-4531708 discloses a solenoid valve comprising a damping device having at least a second annular surface encompassing the annular sealing surface and separated from this latter by an annular damping space.

Document US-A-3476128 discloses an electrically operated control valve which is capable of modulating control action by varying the voltage supplied to the coil of the control valve.

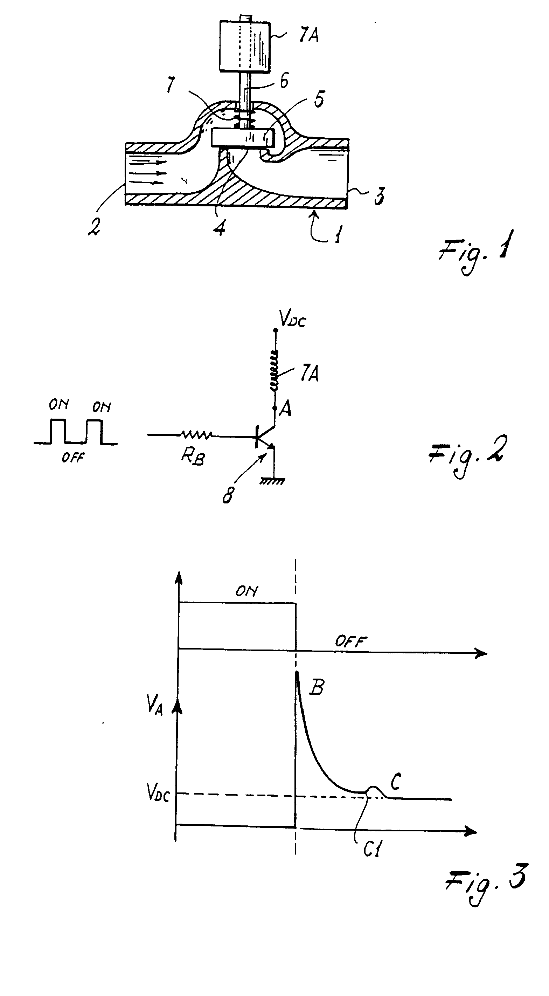

Solenoid valves are two-state (open/closed) shutoff devices and these (known) valves can be represented schematically as shown in section in Figure 1, in which the reference numeral 1 indicates the valve body provided with an inlet 2 and an outlet 3. The body 1 comprises a valve seat 4 to be intercepted by a valving member 5 of elastomeric material. This valving member is rigid with a mobile core 6 on which in one direction a return spring 7 acts to move the valving member 5 onto the valve seat 4 and obtain the "closed" state, and in the other direction a coil 7A in which the mobile core is movably mounted acts to obtain the "open" state when said coil is energized. In some cases a fixed core is also provided.

When the coil 7A is de-energized, the spring 7 urges the valving member 5 violently against the valve seat 4. During this stage the valving member 5 absorbs all the kinetic energy possessed by the mobile core 6 as a result of the thrust of the spring 7, the impact of the valving member 5 against the valve seat 5 being such as to cause permanent deformation of the elastomeric material with the passage of time, to the extent of limiting the useful life of the valve especially in those cases in which the valve is used in applications in which frequent change-over is required (for example when the valve is used to control a fluid flow rate by a pulse-duration modulation control signal).

The main object of the present invention is to provide a method and circuit enabling the useful life of a solenoid valve to be increased by reducing the kinetic energy with which the valving member reaches the valve seat.

This and further objects which will be more apparent from the ensuing detailed description are attained by a method and circuit arrangement the inventive aspects of which are defined in the accompanying claims.

The invention will be more apparent from the detailed description of a preferred embodiment thereof given hereinafter by way of non-limiting example and illustrated on the accompanying drawing, in which:

Figure 1 is a schematic section through a known solenoid valve; Figure 2 is a schematic representation of a conventional control circuit for the solenoid valve;
Figure 3 shows two curves relative to the passage of the solenoid valve from the "open" state to the "closed" state;
Figure 4 shows one embodiment of the circuit arrangement of the invention;
Figures 5 and 6 show respectively operating diagrams relative to a traditionally controlled solenoid valve and a solenoid valve controlled in accordance with the teachings of the invention.

With reference to Figure 2, the coil 7 of the solenoid valve is connected to a d.c. voltage source VDC and in series with a static switch 8 represented by way of example as a transistor with its emitter connected to earth. The base of the transistor 8 is connected via a resistor RB to a source (not shown) of ON (valve open) and OFF (valve closed) control signals.

If the voltage at the point A (at which the coil 7A is connected to the transistor 8) is monitored, this voltage being complementary to that applied across the coil, the signals obtained during its de-energization, in which the control signal passes from the ON state to the OFF state, vary with time as shown in Figure 3, in which the upper signal represents the control signal and the lower signal represents the voltage VA (measured at the point A). As can be seen from the diagrams, the passage of the control signal from the ON state to the OFF state, ie the action which provides corresponding closure of the solenoid valve, is characterised by a voltage at the point A in which the two distinct moments, typical of time-variable inductors, can be recognized, these being described by the equation:

$$V(t) = L(t)\frac{di}{dt} + \frac{dL}{dt}\,i\,(t)$$

The first $V_A$ peak, of high value indicated by B, is represented by the first term of the equation and relates in practice to the discharge of the inductor (coil + cores).

The second peak, of much lower value (indicated by C), relates to the change in the inductance of the coil + core assembly due to the movement of the mobile core.

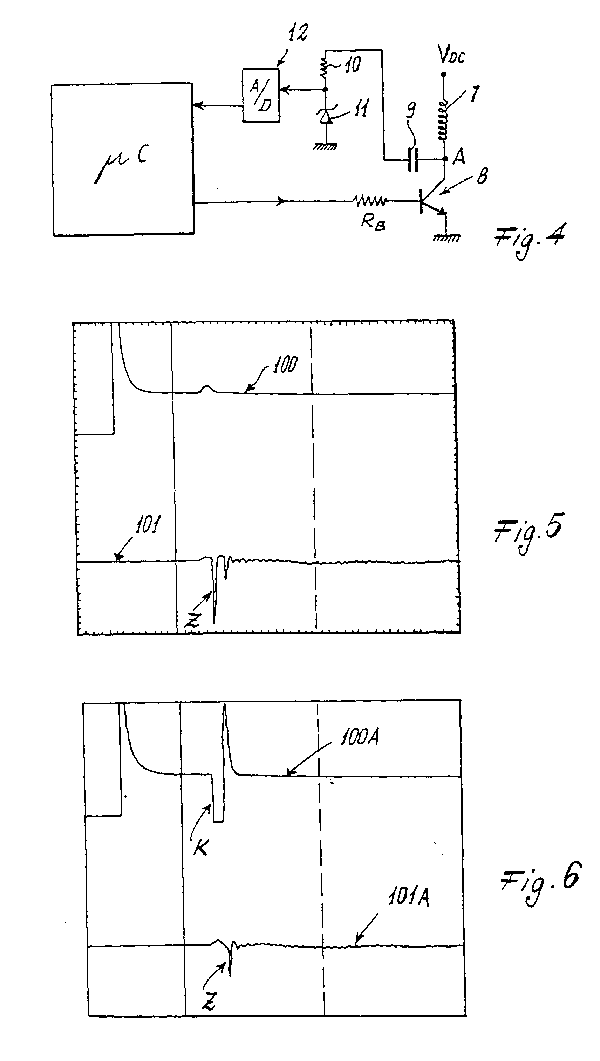

According to the invention, the moment of initiation (point $C_1$) of this second peak C is indicative of the commencement of movement of the mobile core 6 (and relative valving member 5), and is used as a synchronization signal to initiate an operation for damping the impact of the valving member 5 against the valve seat 4, using for this purpose a suitable control circuit, for example a microcontroller μC within the circuit arrangement shown in Figure 4. In this circuit arrangement, the voltage signal is taken from the point A and fed back to the microcontroller μC viaa capacitor 9, a resistor 10, a Zener diode 11 and a converter.

As its first operation. the microcontroller μC (by means of the program implemented within it and the signal reaching it from A) identifies the moment in which the movement of the mobile core 6 commences. This identification is achieved by analyzing the first derivative of the feedback signal. As can be seen from Figure 3, the moment of commencement (point $C_1$) of the movement is characterised by a sign reversal of the first derivative and a consequent relative minimum. Having identified this moment, the microcontroller μC counts a given delay and applies to the transistor 8, on expiry of this delay, an ON control signal (solenoid valve powered) of predetermined duration, to determine a counteracting action to the force provided by 7, for example a braking action, which acts on the mobile core 6 while moving, hence achieving a substantially less violent impact of the valving member 5 against the valve seat 4.

The extent of the delay and the duration of the braking pulse (and hence the quantity of energy counteracting the kinetic energy of the mobile core while in movement) depend on the type of valve (they being a function of the mass of the mobile core, the elastic constant of the spring, the particular mechanical construction and the friction deriving from it), and are determined preferably experimentally on a sample solenoid valve by known means.

In Figure 5, the curve 100 obtained experimentally on the circuit of Figure 2 corresponds to that of Figure 3 and hence to the variation in the voltage at A on passage from valve open to valve closed, whereas the curve 101 represents the signal read by an accelerometer positioned on the valve body 1 (the acceleration of the body is related by reaction to the movement of the mobile core within it). The curve 101 also relates to the circuit arrangement of Figure 2.

The curve 100A of Figure 6 represents the variation of the voltage at point A with time within the circuit arrangement of Figure 4. In the curve 100A the part K relates to the braking signal. The curve 101A represents the accelerometric signal in the circuit arrangement of Figure 4.

As can be seen by comparing the curves 101 and 101A of Figures 5 and 6, the acceleration of the valve body 1 following impact of the mobile core (5, 6) is approximately halved by the action of the braking signal (see peaks Z on the two curves).

**Claims**

1. A method for prolonging the useful life of solenoid valves used for fluid flow shutoff and comprising a coil (7A), a body (1) provided with a valve seat (4), and a mobile core (6) loaded by a return spring (7) and presenting a valving member (5) formed from an elastomer and arranged to cooperate with the valve seat (4) of said body (1), characterised in that a force counteracting the spring is applied to the mobile core (6) while moving towards the valve seat (4) to reduce the energy involved in the impact between the valving member (5) and the valve seat (4), the braking force being obtained by energizing the coil (7A) during the closure stroke of the mobile core (6).

2. A method as claimed in the preceding claims, wherein the energization of the coil (7A) for braking the mobile core (6) occurs with a delay from the commencement of movement of the mobile core and has a duration such as not to substantially vary the duration of the closure stroke of the mobile core (6).

3. A method as claimed in the preceding claims, wherein a feedback signal containing information on the commencement of movement of the mobile core (6) is used in controlling the braking force.

4. A circuit for implementing the method of the preceding claims, wherein the coil (7A) of the solenoid valve is connected in series with a static switch (8), there being connected at a point (A) between these two components a feedback line for a voltage signal leading to a microcontroller (μC) which controls the state and movement of the solenoid valve.

**Patentansprüche**

1. Verfahren zur Verlängerung der Gebrauchslebensdauer von Magnetventilen, die für das Unterbrechen eines Flüssigkeitsstroms verwendet werden und die eine Spule (7A), einen mit einem Ventilsitz (4) versehenen Körper (1) und einen beweglichen Kern (6) aufweisen, der durch eine Rückholfeder (7) vorgespannt ist und mit einem aus einem Elastomer gebildeten Ventilglied (5) versehen ist, dadurch gekennzeichnet, daß dem beweglichen Kern (6) während der Bewegung in Richtung auf den Ventilsitz (4) eine der Feder entgegenwirkende Kraft zugeführt wird, um die vom Ventilglied (5) zum Ventilsitz (4) übertragene Stoßenergie zu vermindern, und daß die Bremskraft dadurch gewonnen wird, daß die Spule (7A) während der Schließphase des beweglichen Kerns (6) erregt wird.

2. Verfahren nach Anspruch 1, dadurch gekennzeichnet, daß die Erregung der Spule (7A) zur Bremsung des beweglichen Kerns (6) mit einer vom Beginn der Bewegung des beweglichen Kerns einsetzenden Verzögerung erfolgt, deren Dauer derart bemessen ist, daß die Dauer der Schließphase des beweglichen Kerns (6) nicht wesentlich geändert wird.

3. Verfahren nach Anspruch 1 oder 2, dadurch gekennzeichnet, daß ein Rückführungssignal, das die Information des Beginns der Bewegung des beweglichen Kerns (6) enthält, zur Steuerung der Bremskraft verwendet wird.

4. Schaltungsanordnung zur Durchführung des Verfahrens gemäß den vorstehenden Ansprüchen, dadurch gekennzeichnet, daß die Spule (7A) des Magnetventils in Reihe mit einem statischen Schalter (8) geschaltet ist und daß vom gemeinsamen Verbindungspunkt (A) dieser beiden Komponenten zu einem Mikrosteuerbaustein (µC) ein Rückführungskanal für ein Spannungssignal vorgesehen ist, wobei dieser Mikrosteuerbaustein den Schaltzustand und die Bewegung des Magnetventils steuert.

## Revendications

1. Procédé destiné à prolonger la durée d'utilisation d'électrovannes utilisées pour l'interruption de la circulation d'un fluide et comprenant une bobine (7A), un corps (1) ayant un siège (4) de soupape, et un noyau mobile (6) rappelé par un ressort de rappel (7) et présentant un organe obturateur (5) formé d'un élastomère et destiné à coopérer avec le siège (4) du corps (1) de soupape, caractérisé en ce qu'une force antagoniste de la force du ressort est appliquée au noyau mobile (6) lorsqu'il se déplace vers le siège (4) de la soupape afin que l'énergie appliquée lors de l'impact entre l'organe obturateur (5) et le siège (4) de soupape soit réduite, la force de freinage étant obtenue par excitation de la bobine (7A) pendant la course de fermeture du noyau mobile (6).

2. Procédé selon la revendication précédente, dans lequel l'excitation de la bobine (7A) de freinage du noyau mobile (6) se produit avec un retard par rapport au début du déplacement du noyau mobile et a une durée telle qu'elle ne fait pratiquement pas varier la durée de la course de fermeture du noyau mobile (6).

3. Procédé selon les revendications précédentes, dans lequel un signal de réaction contenant des informations relatives au début du déplacement du noyau mobile (6) est utilisé pour le réglage de la force de freinage.

4. Circuit destiné à la mise en oeuvre du procédé des revendications précédentes, dans lequel la bobine (7A) de l'électrovanne est connectée en série avec un commutateur statique (8), une ligne de réaction d'un signal de tension étant connectée en un point (A) compris entre ces deux composants et rejoignant un microcontrôleur (µC) qui règle l'état et le déplacement de l'électrovanne.

Fig. 1

Fig. 2

Fig. 3

EP 0 773 394 B1

Fig. 4

Fig. 5

Fig. 6

6